# EUROPEAN PATENT SPECIFICATION

(11) **EP 3 171 626 B1**
(45) Date of publication and mention of the grant of the patent: **10.01.2018**
(21) Application number: 15195815.4
(22) Date of filing: 23.11.2015
(51) Int. Cl.: H04W 24/02

(54) **METHOD AND SYSTEM FOR TESTING NETWORK'S DATA TRANSMISSION PERFORMANCE**
VERFAHREN UND SYSTEM ZUM TESTEN DER DATENÜBERTRAGUNGSLEISTUNG EINES NETZWERKS
PROCÉDÉ ET SYSTÈME POUR TESTER LA PERFORMANCE DE TRANSMISSION DE DONNÉES DU RÉSEAU

(43) Date of publication of application: 24.05.2017
(73) Proprietor: Rohde & Schwarz GmbH & Co. KG, 81671 München (DE)
(72) Inventor: Berger, Dr., Jens, 4533 Riedholz (CH)
(74) Representative: Körfer, Thomas

(56) References cited:
- WO-A1-2006/032125
- US-A1- 2008 059 848
- US-A1- 2014 052 825
- US-A1- 2015 189 525

## Description

### FIELD OF THE INVENTION

The invention relates to a method for testing a data transmission performance between a first network node and a second network node in a network and a system thereof. The invention especially relates to a data transmission speed test system and method. Those data transmission performance tests are used to test the transmission speed of data during network nodes in a network, preferably a wireless communications network.

### BACKGROUND OF THE INVENTION

Today's approaches for testing network data transmission performance are realized by downloading data files from a server with a user's equipment, UE. Those test approaches are known as so-called "speed tests" and are available as computer programs, applications on the UE or as web-based services. In WO2006/032125 A1 tests are described for determining the throughput of Ethernet frames or transport control protocol / internet protocol ("TCP/IP") packets. In US 2008/0059848 A1 a data transmission speed test system is described in which a test file is uploaded and downloaded between different network nodes in a network node. The time duration for uploading and downloading of the test file is measured. The transmission speed is calculated based on the test file size and the time duration for downloading and/or uploading.
Often, the uploading and the downloading is combined in a sequential test, where at first the test file is downloaded or uploaded and afterwards the opposite direction is used. There are test applications that apply a short pre-test for choosing the best performance or closest hosting server for the speed test.

The state of the art performance tests are restricted to the downloading and uploading of the test files, either partially or completely, or for pre-defined time durations. Depending on the test file size and/or the predefined test duration, those tests cause high data traffic and/or will deliver results for a short time only.

Especially for high-speed mobile networks, a longer speed test will lead to a large data volume transmitted only of the purpose of speed testing. The observation of a longer period or the seamless repetition of those tests will cause heavy loads for the tested network and the testing network nodes. In case of mobile application, the excessive or automated use of those data transmission performance tests will harm other users or subscribers in the network.

Thus, there is a need (object) to provide a method for testing a data transmission performance in which the above-identified drawbacks are avoided. The data transmission performance test should relax the network load and should not harm other network nodes in the network during the test.

The above-identified objective is solved by the technical features of the independent patent claims. Advantageous implementation forms are described with the respective dependent claims.

### SUMMARY OF THE INVENTION

According to a first aspect of the invention, a method for testing a data transmission performance between a first network node and a second network node in a network is described. The method comprises establishing a test data connection between the first network node and the second network node as a permanent test connection. The method further comprises establishing at least one additional test data connection as a temporary test connection between the first network node and the second network node according to a pre-defined test pattern for a defined time duration in parallel to the permanent test connection, and accumulating the throughput of all test data connections, wherein a data throughput of the accumulated test connection of all parallel test connections is higher than the throughput of the permanent test data connection. A test connection may be an established communication connection between different network nodes on which data are transmitted. The data are preferably test data of a known size.
A permanent test connection may be a test connection in which data are transmitted via a continuous data flow between network nodes, wherein the bitrate of the permanent test connection does not exceed a defined limit during the test performance time duration, which is defined as time duration between a start time and a stop time of the performance test.

At least one additional, parallel and temporary test connection may be established between the first network node and the second network node, wherein a data throughput of the accumulated test connection of all parallel test connections is higher than the throughput of the permanent test data connection. The time duration of the temporary test connection is significantly smaller than the time duration of the permanent test connection, preferably ten times, more preferably 100 times smaller.
Thus, the performance of the network can be tested without a permanent high loading of the connection between the first network node and the second network node.
The method can be assumed as constant floor in data transmission and additional parallel short term data transmissions that a superimposed to the constant floor data transmission. Thus, instead of causing constantly high data flow by having parallel connections active all the time, these high or maximum throughputs are preferably only requested during superimposed pulses that are added.
In the analysis, an interpolation in between the pulses preferably is estimated as the same result as continuous parallel connections.
According to a preferred implementation form of the first aspect, the permanent test connection between the first network node and the second network node is restricted in bit rate to a pre-defined limit. The pre-defined limit might be based on the time at which the test is performed, the actual network load and/or the number of active subscribers in the network to assure a stabile function of the network without harming other subscribers. Thus, it is assured that the network is not overloaded by applying the data transmission performance test. In addition, seamless repetitions of those tests will not cause heavy loads for the tested network.
According to another preferred implementation form of the first aspect of the invention, the permanent test data connection is a unidirectional data connection from the first network node to the second network node or vice versa, wherein the temporary test connection is a unidirectional data connection from the second network node to the first network node or vice versa. Preferably, the unidirectional connections are established in opposite directions. Thus, upload and download connectivity is separated to different test connections, which further relaxes the network performance.
According to another preferred implementation form of the first aspect of the invention, the at least one temporary test connection changes direction in an alternating manner or according to a pre-defined test pattern. Thus, the data transmission performance test can be applied to an actual load situation in the network.
According to another preferred implementation form of the first aspect of the invention, the permanent test connection changes direction in an alternating manner or according to a pre-defined test pattern, preferably in synchronous manner to the temporary test connection and more preferably synchronous in opposite directions. Thus, the upload and download data transmission performance test does not overload the network.
Thus, the invention allows testing a network data transmission performance over longer observation periods with reduced load at the network by sparse transmission performance testing. Thus, the testing of continuity of data delivery is combined with tests for high and maximum throughput rates. To achieve this, the permanent test connection is combined with at least one additional temporary test connections. A single continuous data connection lasts over the entire test duration as the permanent data connection, wherein the additional test connections are activated in parallel temporarily following the pre-defined pattern.

According to another preferred implementation form of the first aspect of the invention, an analysis of the data transmission performance is made separately for the time duration in which the temporary test connection is activated and for the time duration in which the permanent test connection is activated. Activation herein means that the test connection is established and data is transmitted between the network nodes over this test connection. Thus, the continuity and the high-speed rates are tested separately and are interpolated to obtain the final test results.

According to another preferred implementation form of the first aspect of the invention, the analysis includes accumulating the throughput of all test data connections and estimating the maximum capacity of the networks data transmission performance for a single data connection between the first network node and the second network node based on the accumulated throughput.
As previously stated, the method for testing can be considered as a superposition of a constant data flow transmission and additional temporary short-term data transmissions. The temporary test connection is preferably pulse-wise superimposed to the constant floor data transmission. Thus, instead of causing a constantly high data flow by having parallel connections active all the time, these high of maximum throughputs are preferably only requested during the superimposing pulses.

The pulse width of the at least one additional temporary test data connection can be preferably varied over the test duration of the permanent test data connection.
In another preferred implementation form of the first aspect of the invention, the first network node and/or the second network node is a single data server and/or or a single user's equipment.
In another preferred implementation form of the first aspect of the invention, the network is a mobile communications wireless network such as LTE-based mobile communications network or UMTS-based communications network.
According to another preferred implementation form of the first aspect of the invention, the first network node and/or the second network node is a plurality of data servers and/or a plurality of user's equipment. The transmission performance test results are accumulated across the plurality of data servers and/or the plurality of user's equipment. This allows overall data transmission performance test in the network, which may be independent from a user's equipment performance and a single data server. In such a case, the overall network can be tested in dependence on a load condition of the network or a time condition of the network.
According to another preferred implementation form of the first aspect of the invention, at least a second temporary test connection is established between the first network node and the second network node according to a predefined test pattern for a defined time duration in parallel to the permanent test connection and in parallel to the temporary test connection to achieve a higher data throughput when accumulating all test connections compared to the permanent test connection.
In a more preferred embodiment, the amount of additional test connections is higher than 2, preferably higher than 5, more preferably higher than 10.
This allows the establishment of parallel temporal test connections in order to relax the data amount in the network and preferably to split the traffic to different network nodes.
According to another preferred implementation form of the first aspect of the invention, the at least one additional test connection is a pulse-wise test connection that is superimposed to the permanent test connection. The pulse width of each pulse as well as the durations between each single pulse might vary and might follow a specific predefined test pattern.

According to another implementation form of the first aspect of the invention, the data transmission performance test is a network speed test, wherein the time duration for transmitting a certain amount of test data is analyzed.
In a second aspect of the invention, a system for testing the performance of a network is provided. The system at least comprises a first network node and a second network node, wherein the system is configured to establish a test data connection between the first network node and the second network node as a permanent test connection. The system is further configured to establish at least one additional test data connection as a temporary test connection between the first network node and the second network node according to a pre-defined test pattern for a defined time duration in parallel to the permanent test connection, and the system is further configured to accumulate the throughput of all test data connections; wherein a data throughput of the accumulated test connection of all parallel test connections is higher than the throughput of the permanent test data connection. The system might further comprise an analyzing means that is configured to perform a data transmission performance test separately for the time duration in which the temporary test connection is activated and for the time duration in which only the permanent test connection is activated.
In a preferred implementation form of the second aspect of the invention, the permanent test connection comprises a constant data flow during the complete data transmission performance test duration, wherein the test duration time is defined by a test start time and a test stop time of the data transmission performance test.

In another preferred implementation form of the second aspect of the invention, the temporary test connection comprises a predefined number of data flow pulses during the complete data transmission performance test duration time and each data flow pulse comprises a significantly smaller time duration compared with the complete data transmission performance test duration time.

The system according to the second aspect, and its implementation forms, achieves the same advantages and technical effects than the method according to the first aspect and its respective implementation forms.
It has to be noted that all network nodes and means described in the present application could be implemented in software or hardware or any kind of combination thereof.

All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be full formed by eternal entities is not reflected in the description of a specific detailed element of that entity which performs that specific step or functionality, it should be clear for a skilled person that these methods and functionalities can be implemented in respective software or hardware elements, or any kind of combination thereof.

### BRIEF DESCRIPTION OF THE DRAWINGS

In the following exemplary embodiments of the invention are described with reference to the drawings by way of example only. Those exemplary embodiments do not limit the scope of the invention. The same reference signs in different drawings indicate the same elements or at least the same functions unless otherwise stated. In the drawings:
- Fig. 1: shows a flow chart of a method according to an embodiment of the present invention,
- Fig. 2: shows a first embodiment of a system according to the present invention,
- Fig. 3: shows a second embodiment of a system according to the present invention,
- Fig. 4: shows a third exemplary embodiment of a system according to the present invention,
- Fig. 5: shows a fourth exemplary embodiment of a system according to the present invention,
- Fig. 6: shows a first exemplary time diagram of data throughput of the test connections according to the present invention, and
- Fig. 7: shows a second exemplary time diagram of data throughput of the test connections according to the present invention.

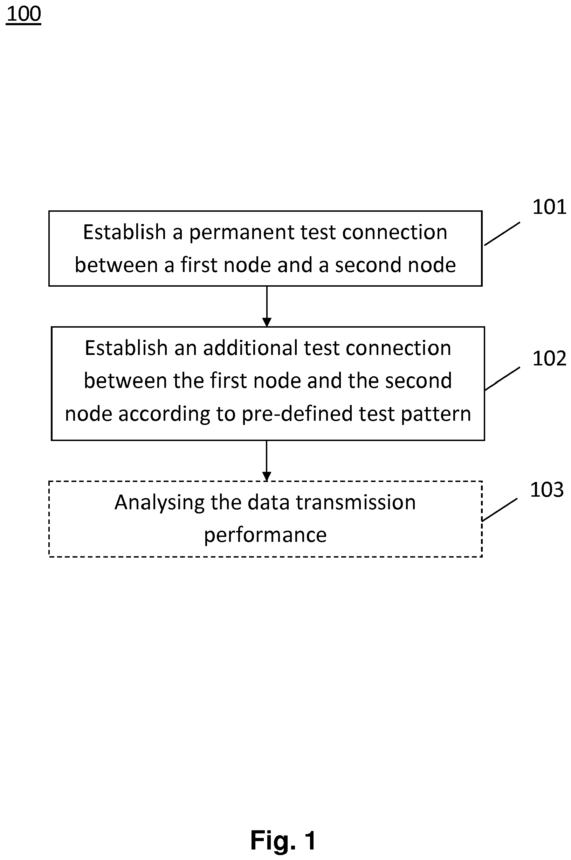

In Fig. 1 an exemplary flow diagram of an inventive method 100 is shown. According to method step 101, the establishing of a permanent test connection 4 between a first network node 2 and the second network node 3 in a network 1 is described. According to method step 102, the establishing of at least one additional test connection 5, 5' between the first network node 2 and the second network node 3 according to a pre-defined test pattern is shown.

Optionally, the method 100 comprises the method step 103 in which the data transmission performance is analyzed based on accumulated throughput 6.

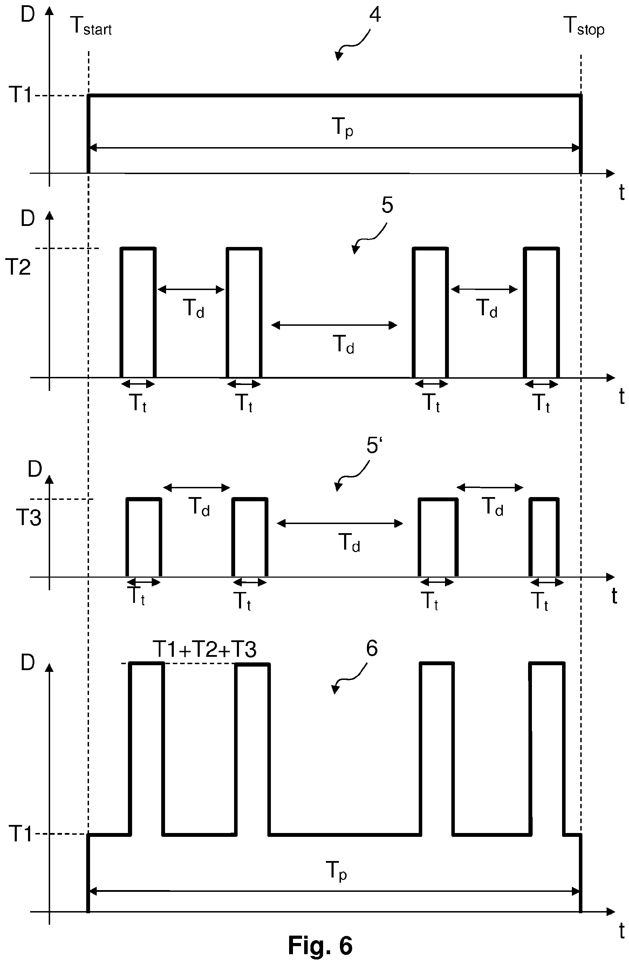

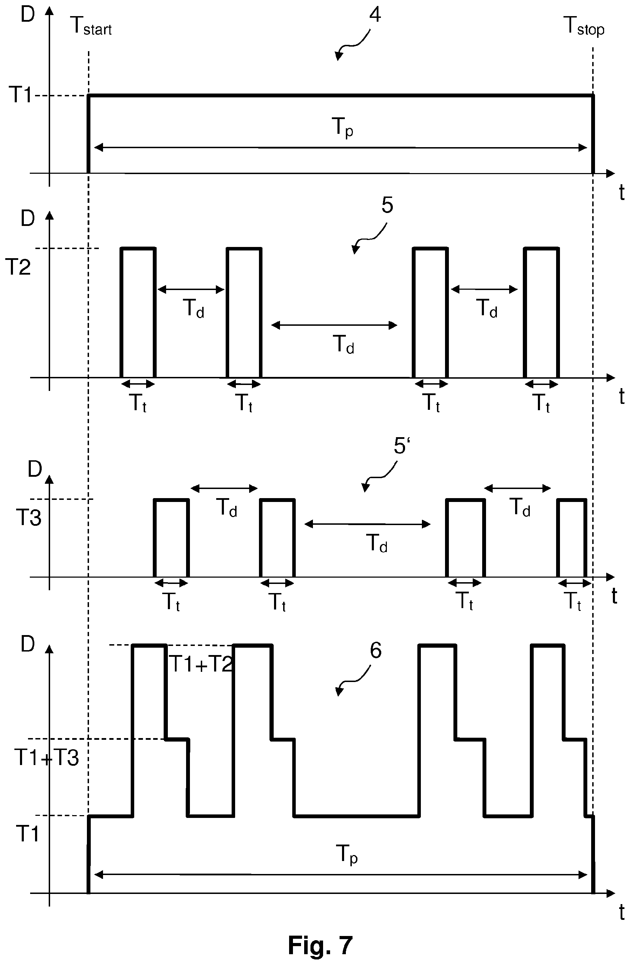

The permanent test connection 4 lasts over an entire test duration Tₚ as a permanent test connection, while at least one additional test connection 5, 5' is activated in parallel temporarily following a pre-defined data pattern as shown in Fig. 6 or 7. In the analysis step 103, an interpolation in between the pulses of the additional test connection 5 and the permanent test connection 4 is estimated as the same result as continuous parallel connections according to the prior art.

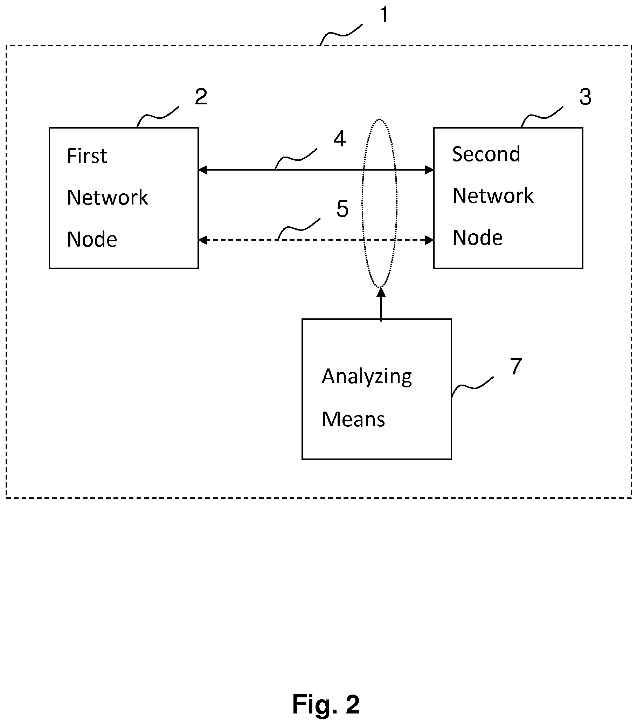

In Fig. 2, a first embodiment of an inventive system is shown. Therein a network 1 comprises a first network node 2 and a second network node 3. The first network node 2 and the second network node 3 establish a permanent data connection 4, which in case of Fig. 2 is a bi-directional test connection. According to the invention, an additional data test connection 5 between the first network node 2 and the second network node 3 is established as a bidirectional test connection 5.

The data transmission performance test is achieved by an accumulation of the permanent data test connection 4 and the additional test connection 5. Therefore, an analysis means 7 is used that accumulates the throughput of different test connections 4, 5 and obtains the data transmission performance test results easily.

The analyzing means 7 might further be configured to predefine test pattern to establish the additional test connection 5 and/or to re-configure an established test connection and is used to analyze the performance of the network 1. The analyzing means 7 can be incorporated in one of the network nodes 2, 3.

Preferably, the system for testing the data transmission performance is a computer-implemented program, which can be stored as an application in a memory of the network nodes 2, 3, such as a data server or a UE, e.g. a smart phone or any mobile communications device.

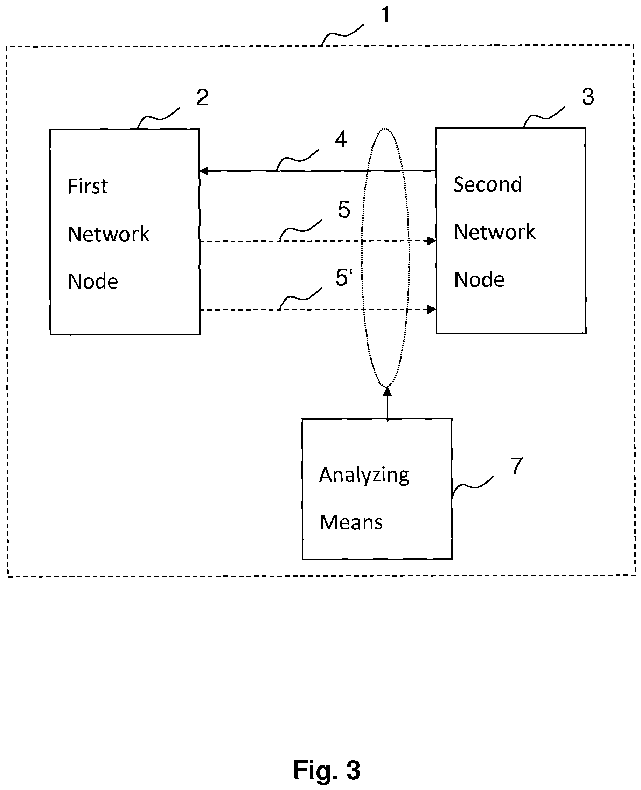

In Fig. 3, a second exemplary embodiment of an inventive system is shown. In comparison to Fig. 2, the system according to Fig. 3 establishes a second additional test connection 5', which is established between the first network node 2 and the second network node 3. Accordingly, the analyzing means 7 accumulates the permanent test connection 4 and both additional test connections 5, 5'. It should be noted that the permanent test connection 4 is a unidirectional connection from the second network node 3 to the first network node 2. It should further be noted that the temporary test connections 5, 5' are unidirectional connections from the first network node 3 to the second network node 2. So, the download and upload behavior of the network 1 is observed on distinct test connections that relaxes each test connection. The directions can preferably vary in an alternating manner in order to cross-check the network nodes 2, 3.

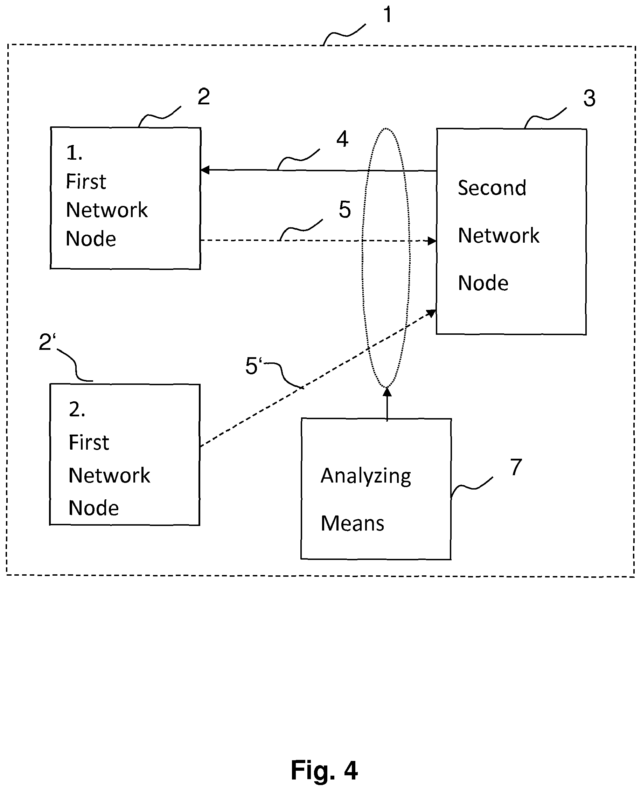

In Fig. 4, a third exemplary embodiment of the inventive system is shown. In contrast to Fig. 2 and Fig. 3, the first network node 2 is represented as two distinct network nodes 2, 2' in order to illustrate that a network node according to the invention can be a plurality of data server or a plurality of user equipment. Thus, in order to test the data transmission performance in the network 1, different test connection in between different entities are used.

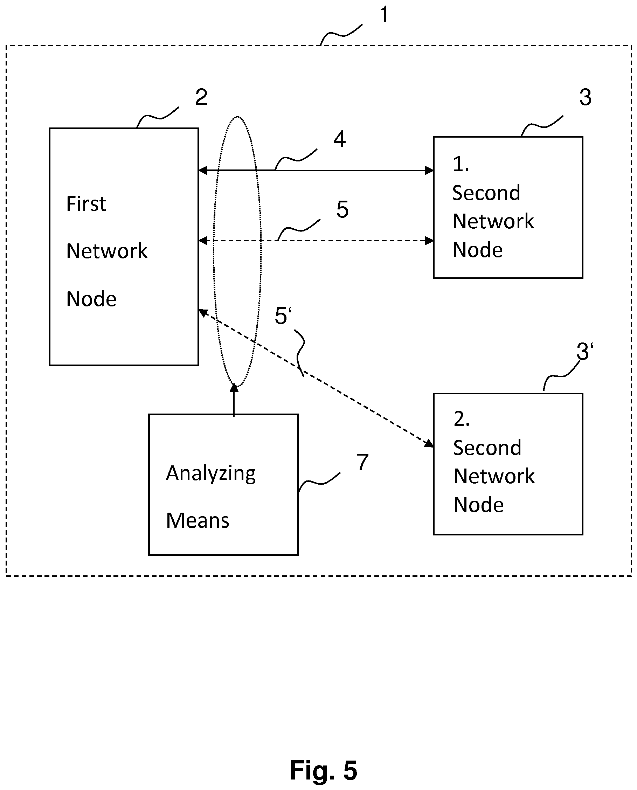

In Fig. 5, a fourth exemplary embodiment of the inventive system is shown. In contrast to Fig. 2 to Fig. 4, the second network node 3 is represented as two distinct network nodes 3, 3' in order to illustrate that a network node according to the invention can be a plurality of data server or a plurality of user equipment. Thus, in order to test the data transmission performance in the network 1, different test connection in between different entities are used. The test connection directions can preferably vary during the performance test.
According to Fig. 3 and Fig. 4 the permanent test connection is a unidirectional test connection from the second network node 3 to the first network node 2. In contrast, the unidirectional test connection 5 or 5' are established from the first network node 2 to the second network node 3 as unidirectional connections. In contrast, according to Fig. 2 and Fig. 5 the permanent test connection 4 is a bidirectional test connection.
In Fig. 6, a first time diagram for data throughput D of the permanent test connection 4, the first additional test connection 5, and the second additional test connection 5' and an accumulated throughput 6 is shown. The permanent test connection 4 comprises a bitrate threshold limit T1 to limit the data throughput over the test duration Tₚ. The test duration Tₚ preferably lasts from a starting time Tₛₜₐᵣₜ to a stop time point Tₛₜₒₚ, wherein the data throughput D does not exceed the limit T1 to relax the network 1.
In between the start time Tₛₜₐᵣₜ and the stop time Tₛₜₒₚ, the additional test connections 5, 5' are applied in the test performance system. According to the first additional test connection 5 four different blocks of data transmission with a data throughput D according to a threshold limit T2 are applied in between the first network node 2 and the second network node 3. The time duration Tₜ of each block of the temporary test connection 5 can be equal or can vary. In addition, the time durations T_{d} in between the different data blocks can vary according to a pre-defined test pattern.

Additionally a second temporary test connection 5' is shown that comprises four blocks of a duration Tₜ having a bitrate limit T3.
The accumulated throughput 6 shows that the for the time duration Tₚ of the permanent test connection 4 the threshold limit T1 is not exceeded, except for the time slots in which the additional test connections 5, 5' are established. For this pre-defined transmission pattern the accumulated throughput 6 has a value of the sum (T1+T2+T3) of all throughputs D of the different test connections 4, 5, 5'.

The analyzing means 7 is used to accumulate the test connections 4, 5, 5'. As can be seen in Fig. 6, the maximum speed of the network 1 is tested only during four data blocks and not over the complete test duration time Tₚ, which is applied between Tₛₜₐᵣₜ to Tₛₜₒₚ. Thus, an observation of the network performance over a longer period does not cause heavy loads for the tested network 1 or the tested network nodes 2, 3. Thus, in case of mobile applications, the excessive or automated use of those speed tests does not harm other subscribers in the network 1.
In Fig. 7, a second time diagram showing a different predefined test pattern is shown. In contrast to Fig. 6, the blocks of the second additional test connection 5' is time shifted which causes an accumulated throughput 6 that has several bit rate steps.
The accumulated throughput 6 shows that, for the time duration Tₚ of the permanent test connection 4, the threshold limit T1 is not exceed, except for the time slots in which the additional test connections 5, 5' are established. For this pre-defined transmission pattern the accumulated throughput 6 has different values that are repeated stepwise, such as the sum (T1+T2) of the permanent test connection limit T1 and the first additional temporary test connection T2 as well as the sum (T1+T3) of the permanent test connection limit T1 and the second additional temporary test connection 5'.

All features of all embodiments described, shown and/or claimed herein can be combined with each other.

While various embodiments of the present invention have been described above, it should be understood that they have been presented by way of example only, and not for limitation. Numerous changes to the disclosed embodiments can be made in accordance with the disclosure herein without departing from the scope of the invention. Thus, the scope of the present invention should not be limited by any of the above-described embodiments. Rather, the scope of the invention should be defined in accordance with the following claims.

Although the invention has been illustrated and described with respect to one or more implementations, equivalent alterations and modifications will occur to others skilled in the art upon the reading and understanding of this specification and the annexed drawings. In addition, while a particular feature of the invention may have been disclosed with respect to only one of several implementations, such feature may be combined with one or more other features of the other implementations as may be desired and advantageous for any given or particular application.

## Claims

1. A method for testing a data transmission performance between a first network node (2) and a second network node (3) in a network (1), the method comprises:
establishing (101) a test data connection between the first network node (2) and the second network node (3) as a permanent test connection (4); and
establishing at least one additional test data connection as a temporary test connection (5, 5') between the first network node (2) and the second network node (3) according to a pre-defined test pattern for a defined time duration (Tₜ) in parallel to the permanent test connection (4), and accumulating the throughput of all test data connections (4, 5, 5'); wherein a data throughput of the accumulated test connection of all parallel test connections is higher than the throughput of the permanent test data connection.

2. The method according to claim 1,
wherein the permanent test connection (4) between the first network node (2) and the second network node (3) is restricted in bitrate to a pre-defined limit (T1).

3. The method according to claim 1 or 2,
wherein the permanent test connection (4) is a unidirectional data connection from the first network node (2) to the second network node (3); and
wherein the temporary test connection (5, 5') is a unidirectional data connection from the second network node (2) to the first network node (3).

4. The method according to any of claims 1 to 3,
wherein the temporary test connection (5, 5') changes direction in an alternating manner or according to a predefined test pattern.

5. The method according to claim 4,
wherein the permanent test connection (4) changes direction in an alternating manner or according to a predefined test pattern, preferably in synchronous manner to the temporary test connection (5, 5').

6. The method according to any of claims 1 to 5,
wherein an analysis of the data transmission performance is made separately for the time duration in which the temporary test connection (5, 5') is activated and for the time duration (Tₚ) in which the permanent test connection (4) is activated.

7. The method according to claim 6,
wherein the analysis comprises:
accumulating the throughput (6) of all test data connections (4, 5, 5'); and
estimating the maximum capacity of the networks data transmission performance for a single data connection between the first network node (2) and the second network node (3) based on the accumulated throughput (6).

8. The method according to any of claims 1 to 7,
wherein the first network node (2) and/or the second network node (3) is a single data server and/or a single user's equipment.

9. The method according to any of claims 1 to 8,
wherein the first network node (2) and/or the second network node (3) is a plurality of data servers and/or a plurality of user's equipments; and
wherein the analyzed data transmission performance is accumulated across the plurality of data servers and/or the plurality of user's equipments.

10. The method according to any of claims 1 to 9,
wherein at least a second temporary test connection (5') is established between the first network node (2) and the second network node (3) according to a pre-defined test pattern for a defined time duration in parallel to the permanent test connection (4) and in parallel to the temporary test connection (5), wherein the data throughput of the accumulated all test connections (4, 5, 5') is higher compared to the permanent test connection (4).

11. The method according to any of claims 1 to 10,
wherein the amount of temporary test connections (5, 5') is higher than 2, or higher than 5, or higher than 10.

12. The method according to any of claims 1 to 11,
wherein the temporary test connection (5, 5') is a pulse-wise test connection that is superimposed to the permanent test connection (4).

13. The method according to any of claims 1 to 12,
wherein the data transmission performance test is a network speed test; and
wherein the time duration (Tₚ) for transmitting a certain amount of test data is analyzed.

14. A system for testing the performance of a network (1) at least comprising a first network node (2) and a second network node (3),
wherein the system is configured to:
establish a test data connection between the first network node (2) and the second network node (3) as a permanent test connection (4); and
establish at least one additional test data connection as a temporary test connection (5, 5') between the first network node (2) and the second network node (3) according to a pre-defined test pattern for a defined time duration (Tₜ) in parallel to the permanent test connection (4), and the system is further configured to accumulate the throughput of all test data connections; wherein a data throughput of the accumulated test connection of all parallel test connections is higher than the throughput of the permanent test data connection; and wherein the system further comprises an analyzing means (7) that is configured to perform a data transmission performance test separately for the time duration (Tₜ) in which the temporal test connection (5, 5') is activated and for the time duration (T_{d}) in which only the permanent test connection (4) is activated.

15. Computer program with program code means, in order to perform all steps of any of claims 1 to 14, if the program is run on a computer or on a digital signal processor.

## Patentansprüche

1. Verfahren zum Testen einer Datenübertragungsleistung zwischen einem ersten Netzwerkknoten (2) und einem zweiten Netzwerkknoten (3) in einem Netzwerk (1), wobei das Verfahren folgende Schritte umfasst:
Herstellen (101) einer Testdatenverbindung zwischen dem ersten Netzwerkknoten (2) und dem zweiten Netzwerkknoten (3) als ständige Testverbindung (4); sowie
Herstellen von mindestens einer zusätzlichen Testdatenverbindung als temporäre Testverbindung (5, 5') zwischen dem ersten Netzwerkknoten (2) und dem zweiten Netzwerkknoten (3) gemäß einem vorgegebenen Testmuster für eine festgelegte Zeitdauer (Tₜ) parallel zu der ständigen Testverbindung (4), sowie Kumulieren des Durchsatzes aller Testdatenverbindungen (4, 5, 5'); wobei ein Datendurchsatz der kumulierten Testverbindung aller parallelen Testverbindungen höher als der Durchsatz der ständigen Testdatenverbindung ist.

2. Verfahren nach Anspruch 1,
wobei die ständige Testverbindung (4) zwischen dem ersten Netzwerkknoten (2) und dem zweiten Netzwerkknoten (3) in der Bitgeschwindigkeit auf einen vorgegebenen Grenzwert (T1) beschränkt ist.

3. Verfahren nach Anspruch 1 oder 2,
wobei die ständige Testverbindung (4) aus einer Datenverbindung in einer Richtung von dem ersten Netzwerkknoten (2) zu dem zweiten Netzwerkknoten (3) besteht; und
wobei die temporäre Testverbindung (5, 5') aus einer Datenverbindung in einer Richtung von dem zweiten Netzwerkknoten (3) zu dem ersten Netzwerkknoten (2) besteht.

4. Verfahren nach einem der Ansprüche 1 bis 3,
wobei die temporäre Testverbindung (5, 5') abwechselnd oder nach einem vorgegebenen Testmuster ihre Richtung ändert.

5. Verfahren nach Anspruch 4,
wobei die ständige Testverbindung (4) abwechselnd oder nach einem vorgegebenen Testmuster, vorzugsweise synchron mit der temporären Testverbindung (5, 5'), ihre Richtung ändert.

6. Verfahren nach einem der Ansprüche 1 bis 5,
wobei eine Analyse der Datenübertragungsleistung für die Zeitdauer, in der die temporäre Testverbindung (5, 5') aktiviert ist, und für die Zeitdauer (Tₚ), in der die ständige Testverbindung (4) aktiviert ist, getrennt vorgenommen wird.

7. Verfahren nach Anspruch 6,
wobei die Analyse folgende Schritte umfasst:
Kumulieren des Durchsatzes aller Testdatenverbindungen (4, 5, 5'); und
Schätzen der maximalen Kapazität der Netzwerk-Datenübertragungsleistung für eine einzelne Datenverbindung zwischen dem ersten Netzwerkknoten (2) und dem zweiten Netzwerkknoten (3) auf der Grundlage des kumulierten Durchsatzes (6).

8. Verfahren nach einem der Ansprüche 1 bis 7,
wobei der erste Netzwerkknoten (2) und/oder der zweite Netzwerkknoten (3) aus einem einzelnen Datenserver und/oder einem einzelnen Benutzer-Endgerät besteht.

9. Verfahren nach einem der Ansprüche 1 bis 8,
wobei der erste Netzwerkknoten (2) und/oder der zweite Netzwerkknoten (3) aus einer Vielzahl von Datenservern und/oder einer Vielzahl von Benutzer-Endgeräten besteht; und
wobei die analysierte Datenübertragungsleistung über die Vielzahl von Datenservern und/oder die Vielzahl von Benutzer-Endgeräten kumuliert wird.

10. Verfahren nach einem der Ansprüche 1 bis 9,
wobei mindestens eine zweite temporäre Testverbindung (5') zwischen dem ersten Netzwerkknoten (2) und dem zweiten Netzwerkknoten (3) gemäß einem vorgegebenen Testmuster für eine festgelegte Zeitdauer parallel zu der ständigen Testverbindung (4) und parallel zu der temporären Testverbindung (5) hergestellt wird, wobei der Datendurchsatz aller kumulierten Testverbindungen (4, 5, 5') im Vergleich zu der ständigen Testverbindung (4) höher ist.

11. Verfahren nach einem der Ansprüche 1 bis 10,
wobei die Menge der temporären Testverbindungen (5, 5') größer als 2, oder größer als 5 oder größer als 10 ist.

12. Verfahren nach einem der Ansprüche 1 bis 11,
wobei die temporäre Testverbindung (5, 5') eine pulsartige Testverbindung darstellt, die der ständigen Testverbindung (4) überlagert ist.

13. Verfahren nach einem der Ansprüche 1 bis 12,
wobei der Datenübertragungsleistungstest ein Netzwerkgeschwindigkeitstest ist; und
wobei die Zeitdauer (Tₚ) zur Übertragung einer bestimmten Menge an Testdaten analysiert wird.

14. System zum Testen der Leistung eines Netzwerkes (1) mit mindestens einem ersten Netzwerkknoten (2) und einem zweiten Netzwerkknoten (3),
wobei das System dazu konfiguriert ist:
eine Testdatenverbindung zwischen dem ersten Netzwerkknoten (2) und dem zweiten Netzwerkknoten (3) als ständige Testverbindung (4) herzustellen; und
mindestens eine zusätzliche Testdatenverbindung als temporäre Testverbindung (5, 5') zwischen dem ersten Netzwerkknoten (2) und dem zweiten Netzwerkknoten (3) gemäß einem vorgegebenen Testmuster für eine festgelegte Zeitdauer (Tₜ) parallel zu der ständigen Testverbindung (4) herzustellen, und das System weiterhin dazu konfiguriert ist, den Durchsatz aller Testdatenverbindungen zu kumulieren; wobei ein Datendurchsatz der kumulierten Testverbindung aller parallelen Testverbindungen höher als der Durchsatz der ständigen Testdatenverbindung ist;
und wobei das System weiterhin eine Analyseeinrichtung (7) umfasst, die dazu konfiguriert ist, einen Datenübertragungsleistungstest für die Zeitdauer (Tₜ), in der die temporäre Testverbindung (5, 5') aktiviert ist, und für die Zeitdauer (T_{d}), in der nur die ständige Testverbindung (4) aktiviert ist, getrennt durchzuführen.

15. Computerprogramm mit Programmcode-Einrichtungen, um alle Schritte von jedem der Ansprüche 1 bis 14 durchzuführen, wenn das Programm auf einem Computer oder auf einem digitalen Signalprozessor abläuft.

## Revendications

1. Procédé pour tester une performance de transmission de données entre un premier noeud de réseau (2) et un deuxième noeud de réseau (3) dans un réseau (1), le procédé comprenant :
l'établissement (101) d'une connexion de données de test entre le premier noeud de réseau (2) et le deuxième noeud de réseau (3) en tant que connexion de test permanente (4) ; et
l'établissement d'au moins une connexion de données de test supplémentaire en tant que connexion de test temporaire (5, 5') entre le premier noeud de réseau (2) et le deuxième noeud de réseau (3) conformément à un motif de test prédéfini pendant une durée définie (Tₜ) en parallèle avec la connexion de test permanente (4), et l'accumulation des débits de toutes les connexions de données de test (4, 5, 5') ; dans lequel un débit de données de la connexion de test accumulée de toutes les connexions de test parallèles est supérieur au débit de la connexion de données de test permanente.

2. Procédé selon la revendication 1,
dans lequel la connexion de test permanente (4) entre le premier noeud de réseau (2) et le deuxième noeud de réseau (3) a un débit binaire limité à une limite prédéfinie (T1).

3. Procédé selon la revendication 1 ou 2,
dans lequel la connexion de test permanente (4) est une connexion de données unidirectionnelle du premier noeud de réseau (2) au deuxième noeud de réseau (3) ; et
dans lequel la connexion de test temporaire (5, 5') est une connexion de données unidirectionnelle du deuxième noeud de réseau (2) au premier noeud de réseau (3).

4. Procédé selon l'une quelconque des revendications 1 à 3,
dans lequel la connexion de test temporaire (5, 5') change de direction d'une manière alternée ou conformément à un motif de test prédéfini.

5. Procédé selon la revendication 4,
dans lequel la connexion de test permanente (4) change de direction d'une manière alternée ou conformément à un motif de test prédéfini, de préférence d'une manière synchrone avec la connexion de test temporaire (5, 5').

6. Procédé selon l'une quelconque des revendications 1 à 5,
dans lequel une analyse de la performance de transmission de données est effectuée séparément pendant la durée pendant laquelle la connexion de test temporaire (5, 5') est activée et pendant la durée (Tₚ) pendant laquelle la connexion de test permanente (4) est activée.

7. Procédé selon la revendication 6,
dans lequel l'analyse comprend :
l'accumulation des débits (6) de toutes les connexions de données de test (4, 5, 5') ; et
l'estimation de la capacité maximum de la performance de transmission de données du réseau pour une connexion de données unique entre le premier noeud de réseau (2) et le deuxième noeud de réseau (3) sur la base du débit accumulé (6).

8. Procédé selon l'une quelconque des revendications 1 à 7,
dans lequel le premier noeud de réseau (2) et/ou le deuxième noeud de réseau (3) sont un serveur de données unique et/ou un équipement unique de l'utilisateur.

9. Procédé selon l'une quelconque des revendications 1 à 8,
dans lequel le premier noeud de réseau (2) et/ou le deuxième noeud de réseau (3) sont une pluralité de serveurs de données et/ou une pluralité d'équipements de l'utilisateur ; et
dans lequel la performance de transmission de données analysée est accumulée sur la pluralité de serveurs de données et/ou la pluralité d'équipements de l'utilisateur.

10. Procédé selon l'une quelconque des revendications 1 à 9,
dans lequel au moins une deuxième connexion de test temporaire (5') est établie entre le premier noeud de réseau (2) et le deuxième noeud de réseau (3) conformément à un motif de test prédéfini pendant une durée définie en parallèle avec la connexion de test permanente (4) et en parallèle avec la connexion de test temporaire (5), dans lequel le débit de données de toutes les connexions de test accumulées (4, 5, 5') est plus élevé comparé à la connexion de test permanente (4).

11. Procédé selon l'une quelconque des revendications 1 à 10,
dans lequel la quantité de connexions de test temporaires (5, 5') est supérieure à 2, ou supérieure à 5, ou supérieure à 10.

12. Procédé selon l'une quelconque des revendications 1 à 11,
dans lequel la connexion de test temporaire (5, 5') est une connexion de test au niveau impulsionnel qui est superposée à la connexion de test permanente (4).

13. Procédé selon l'une quelconque des revendications 1 à 12,
dans lequel le test de performance de transmission de données est un test de vitesse de réseau ; et
dans lequel la durée (Tₚ) pour transmettre une certaine quantité de données de test est analysée.

14. Système pour tester la performance d'un réseau (1) comprenant au moins un premier noeud de réseau (2) et un deuxième noeud de réseau (3),
dans lequel le système est configuré pour :
établir une connexion de données de test entre le premier noeud de réseau (2) et le deuxième noeud de réseau (3) en tant que connexion de test permanente (4) ; et
établir au moins une connexion de données de test supplémentaire en tant que connexion de test temporaire (5, 5') entre le premier noeud de réseau (2) et le deuxième noeud de réseau (3) conformément à un motif de test prédéfini pendant une durée définie (Tₜ) en parallèle avec la connexion de test permanente (4), et le système est en outre configuré pour accumuler les débits de toutes les connexions de données de test ; dans lequel un débit de données de la connexion de test accumulée de toutes les connexions de test parallèles est supérieur au débit de la connexion de données de test permanente ;
et dans lequel le système comprend en outre des moyens d'analyse (7) qui sont configurés pour effectuer un test de performance de transmission de données séparément pendant la durée (Tₜ) pendant laquelle la connexion de test temporaire (5, 5') est activée et pendant la durée (T_{d}) pendant laquelle seule la connexion de test permanente (4) est activée.

15. Programme d'ordinateur avec des moyens formant code de programme, afin d'effectuer toutes les étapes de l'une quelconque des revendications 1 à 14, si le programme est exécuté sur un ordinateur ou sur un processeur de signaux numériques.
